# EUROPEAN PATENT APPLICATION

(11) **EP 1 832 566 A1**
(43) Date of publication of application: **12.09.2007**
(21) Application number: 07380065.8
(22) Date of filing: 06.03.2007
(51) Int. Cl.: C04B 41/48, C09D 135/00, C09D 163/00

(54) **Epoxy and unsaturated polyester adhesives in aqueous emulsion for consolidating natural stones**

(30) Priority: 06.03.2006 ES 200600542
(71) Applicant: AIDICO, Asociación de Industrias de la, 03660 Novelda - Alicante Alava (ES); José A. Garcia Moya, S.L.U., 03670 Monforte del Cid - Alicante (ES)
(72) Inventor: Alberola Cerdan, Pablo, 03670 Monforte del Cid, Alicante (ES); Guillem Lopez, Celia, 03660 Novelda, Alicante (ES)
(74) Representative: Carvajal y Urquijo, Isabel

(57) **Abstract**

The present invention relates to the development of structural adhesives of an unsaturated polyester or epoxy nature in aqueous emulsion, for consolidating natural stones.

Their composition corresponds to the following formulations in which the proportions of the different components are expressed in percentages by weight of the resin to which they are added:
a) heat-setting resins containing emulsifying agents,
b) initiators, between 0 and 20%,
c) catalysts, between 0 and 10%,
d) hardeners, between 0 and 100%,
e) water, between 0.1 and 100%,
f) additives, between 0 and 95%.

## Description

The present invention relates to the development of structural adhesives in aqueous emulsion, of unsaturated polyester resins and epoxy resins, for consolidating different natural stones.

### State of the Art

The use of heat-setting polymers such as unsaturated polyester resins or epoxy resins, in the industrial treatment of ornamental stones (mainly marble), has gone in a relatively short time from having a marginal to a fundamental application.

This is the result of the increasing number and type of said applications, mentioning among them:
- Sealing of cracks and pores.
- Consolidating friable blocks or pieces.
- Reinforcing tiles and boards.
- Polishable surface finish.
- Adhesion of bi-layer products (For example, marble tiles on fibrocement).

Heat-setting resins form very hard polymers when they are cross-linked by means of adding hardeners. Consolidating marble pieces is done by depositing on the surface thereof the mixture of a heat-setting resin and a hardener. Processes are eventually carried out facilitating the penetration into the stone to improve its internal cohesion, such that the curing reaction occurs inside the porous structure of the stone.

The intensive use of these heat-setting resins, which normally contain a high content of toxic volatile compounds and irritating compounds, has generated an additional problem in the environmental conditions in the factories using them and requiring increasingly complex modifications of the production lines.

In some operations performed in the known industrial treatment of ornamental stone until obtaining the finished marble product, water is used as a coolant. These operations include: cutting blocks, polishing boards or strips and cutting boards or strips into tiles. Therefore, before applying the heat-setting resins on the surface of the boards, strips or tiles, it is necessary to dry or dehydrate them, introducing the marble pieces in large furnaces where they remain until completely dried, which involves a high energy consumption.

Resin application lines, in turn, require special equipment demanded by the work process, since toxic substances are manipulated in such lines. It is necessary to have a gas extraction system, as well as the protection of nearby workers by means of face masks, safety goggles and protective gloves.

Despite these complications, the use of resins is, for now, unavoidable, since they provide important production benefits due to the decreased number of breaks in the processed marble pieces. This all means that companies in the ornamental stone production field are investigating the possibility of using other alternative resins, benefiting both environmental working conditions (increasingly more rigorous) and the economic and energy savings.

By means of using water-based adhesives, the natural stone processing industry on one hand prevents handling toxic and irritating substances, and on the hand drying the marble pieces prior to incorporating the adhesive.

### Conventional resins and water-based resins

Unsaturated polyester and epoxy resins are made up of prepolymers having more or less long polymeric chains and which, due to controllable physicochemical conditions, are cross-linked by means of polymerization. The polymerization or curing reaction gives rise to a rigid and hard three-dimensional structure. The extensive use of these resins is essentially due to their good mechanical properties determined by the high cross-linking density occurring during the curing thereof.

Physically, resins are liquids having a certain viscosity which, when they polymerize, harden (extreme viscosity), giving good mechanical properties to the ornamental stone structure, or acting as a connection between two surfaces (in a crack, pore, or between two materials).

### Limitations of conventional unsaturated polyester resins and epoxy resins

1. Unsaturated polyester resins are formed by a prepolymer and a monomer. The prepolymer is the product of the polycondensation reaction between two dicarboxylic acids and a glycol. The monomer and solvent of the resin most used is styrene, which is highly volatile and toxic. Unsaturated polyester resins have a very high styrene content, around 60-70%.
2. Epoxy resins are based on the reaction between an epoxy compound and a hardener. The most common of the epoxy compounds are diglycidylether of bisphenol A (DGEBA) derivatives. Hardeners are chemical compounds with groups that are able to react with the terminal oxyrane ring. Usually amines, which are further strongly irritating upon contact with the skin, mucous membranes, etc. More specifically, aliphatic amines (diethylenetriamine (DTA), triethylenetetramine (TETA)) are volatile and irritating low molecular weight compounds.

On the other hand, the molecular weight, and therefore the viscosity of polymers, is very high in order to be used as stone consolidating agents. Organic solvents and diluents are added in order to reduce the viscosity of the resins. Furthermore, the incorporation of solvents facilitates the coalescence of the different reagents, increases the open time and improves stability of the components. The commonly used solvents are low molecular weight glycoethers (ethyleneglycol monopropyl ether, ethyleneglycol monobutyl ether, propyleneglycol monomethyl ether, etc.). However, aromatic solvents such as xylene, ketones (methylethylketone, methylisobutylketone), esters (butylacetate) and alcohols (isopropyl alcohol, butanol) are also commonly used.

The commonly used diluting agents are benzyl alcohol and nonylphenol. Exposure to nonylphenol can cause coughing, respiratory difficulty, skin burns, blurry vision and nausea. On the other hand, benzyl alcohol is harmful upon inhalation and ingestion.

### Epoxy resins in aqueous dispersion

Solvent-based polymers currently continue to be very important and have a wide range of applications. However, for environmental and health reasons, these adhesives are subject to strong social pressure. Due to environmental reasons and health risks associated to exposure to solvents, strict regulations have been established in the emissions of Volatile Organic Compounds (VOC), and in recent years formulations have been developed which minimize the use of VOCs and satisfactorily maintain their physical and mechanical properties. One way to reduce or eliminate the amount of VOCs is to replace the organic solvents with water. To prevent phase separation and maintain dispersion in colloidal dimensions, it is necessary to apply an energy barrier to prevent agglomeration of colloidal particles. The advantages of polymers in aqueous dispersion are based on the use of water which, unlike many solvents, is a cost-effective, noninflammable and especially non-toxic solvent. Polymers in dispersion are being increasingly accepted on an industrial level due to their properties that in many applications are equal to systems with solvents, including the drying properties. Organic polymers do not have affinity to water. To achieve this compatibility, ionic groups are incorporated in the polymer chain that are able to provide dispersions having high shear stability. These groups have a polar load compatible with water with which they form colloids and are generally carboxylate and/or sulfonate groups which allow forming emulsions with water.

The following are included among the different processes for obtaining epoxy resin emulsions:
a) Adding acids (acetic acid, p-amino benzoic acids);
b) Incorporating non-ionic surfactants together with propylene oxide chains;
c) Reacting DGEBA with styrene/methacrylic acid copolymers;
d) Emulsifying by phase inversion;
e) Auto-emulsifying the curing agent.

The description of some of these processes can be fund in patent document US Pat. No. 5,489,630 and US Pat. No. 20020106517, and in literature documents "J.J. Lin, S.M. Chen, S.S. Hu, J. Appl. Polym. Sci., 94, 1797-1802 (2004)*", "*Z.Z. Yang, Y.Z. Xu, D.L. Zhao, M. Xu, Colloid Polym Sci., 278, 1103-1108 (2000)*", "*F.T. Chen, L. Ding, G.Y. Wang, C. P. Hu. Synthesis and characterization of the aqueous dispersions of mixed epoxy resin. Gongneng Gaofenzi Xuebao (2004), 17(4), 561-564*.", "*He, Qingfeng; Chen, Zhiming. Study on synthesis of waterborne epoxy resin emulsifier and emulsion preparation. Huaxue Fanying Gongcheng Yu Gongyi (2004), 20(3), 255-259*"*

Water-based systems show advantages in relation to the conventional alternatives using organic solvents, which allows these products to be more important on the market, mainly in the construction field, since they can be used on wet materials and have a low or null toxicity and are noninflammable.

### Description of the Invention

The present invention relates to the development of structural adhesives having water-based heat-setting epoxy and unsaturated polyester resins suitable for consolidating natural stone, and therefore able to replace heat-setting resins in toxic and irritating base components used in a generalized manner in industrial consolidation systems.

Therefore, the present invention contemplates obtaining a group of are heat-setting resins in aqueous emulsion with the necessary features so that they can be effective as consolidating agents of the different types of industrial marbles and so that they can be adapted to the different industrial reinforcement processes.

### Composition of the formulations

The polymer is the backbone of the resin formulations and the different additives provide specific properties. The starting polymers for the development of the formulations have the following features:
a) In the case of epoxy resins: the resin is obtained as a product of the reaction between bisphenol-A (or bisphenol-F) and the epichlorhydrine. The curing agents are generally amines, although other compounds can be used.
b) In the case of unsaturated polyester resins, they are usually obtained from the reaction between: propyleneglycol, maleic anhydride and phthalic anhydride, among others. The curing agents are peroxides, for example hydrogen peroxide.

The appropriate emulsifying agents are added to these polymers by means of the selected emulsion processes. Occasionally it is also necessary to emulsify the curing agents.

The formulations are modified by means of incorporating additives, which can be added before, during or after the emulsion process. The function of these additives may be improving the specific properties of the resins. The rheological properties, resistance to temperature, surface and adhesive properties are included among the properties that the additives usually modify.

The additives that can be added to the resins in dispersion are, among others:
a) Surface tension or surfactant modifying additives. The surface tension of the resins determines their ability to wet the marble and conditions the strength of the adhesive connection between the resin and the marble. The most common ones are silanes, titanates and carboxylic acids.
b) Viscosity modifying additives. Viscosity is a parameter that greatly conditions the use possibilities. In the event that the viscosity of the dispersions is to be increased, for example for filling holes and flaws of the large stone material, filler minerals and tackifying resins can be added. These additives modify the rheology, prevent possible shrinkages, reduce the degradation ability of the resins due to moisture (wetting agents), lessen costs and are flame retardants.
c) Surface agents or surfactants. Soaps, bactericides, etc., are usually added to the emulsions to stabilize them and improve their performance in heating and cooling cycles during storage.
d) Other additives. Most resin formulations contain UV radiation and ozone protection agents (antioxidants and anti-degradation agents) and anti-hydrolysis agents. In many cases, coloring pigments (azoic or inorganic type) are also added to the resin formulations, therefore it is necessary to evaluate the compatibility thereof with the new aqueous dispersions, as well as curing accelerants and retardants.

Therefore, according to a first essential aspect, the present invention relates to consolidating natural stones by means of heat-setting resins in aqueous dispersion, without needing to dehydrate the marble prior to the consolidation process.

The natural stone consolidation process with water-based resins comprises the following steps:
a) modifying the heat-setting resins so that they are able to be emulsified in water,
b) mixing under stirring the components of the aqueous consolidating agent: heat-setting resin, curing agent, emulsifying agents, water and corresponding additives, until obtaining a homogenous emulsion, and
c) applying the emulsion on the marble, without needing a previous dehydration, allowing the consolidating agent to cure for a sufficient time until obtaining the cured polymer, tackless and with good mechanical properties. The temperature can be from 5°C to 100°C.

The difference between the previously described process and the conventional process is based on the type of resin used, in this case heat-setting resin in aqueous emulsion, and the possibility of applying the resin to the marble in the presence of water.

As explained, the structural adhesives sought to be protected in the present invention correspond to the following formulations, in which the proportions of the different components are expressed in percentages by weight of the resin to which they are added:
- Heat-setting resins (epoxy or unsaturated polyester) containing emulsifying agents (prepared to be emulsified)
- Polymerization reaction initiators (for example acetate or cobalt octoate): Between 0 and 20%
- Polymerization reaction catalysts (for example peroxides, azo and azine compounds): Between 0 and 10%
- Hardeners or cross-linking agents (for example of an amine nature): Between 0 and 100%
- Water: Between 0.1 and 100%
- Additives: Between 0 and 95%

### Brief Description of the Figures

The figures corresponding to the characterization of the unsaturated polyester resin and epoxy resin formulations described in the examples of the present invention are included below.

The determination of the chemical functional groups was done by means of infrared spectroscopy (FTIR).

The analysis of the adhesion and of the study of the interaction between the resin and the marble was done by means of scanning electron microscopy (SEM).
Figure 1 shows an infrared spectrum of unsaturated polyester resin, as described in Example 1.
Figure 2 shows a cross-sectional SEM image of ivory cream marble coated with unsaturated polyester resin, as described in Example 1.
Figure 3 shows an SEM image of an unsaturated polyester coating with 5% SiO₂, as described in Example 2.
Figure 4 shows a cross-sectional SEM image of ivory cream marble coated with unsaturated polyester with 5% SiO₂, as described in Example 2.
Figure 5 shows an infrared spectrum of a bisphenol A/F diglycil ether epoxy resin, as described in the example 3.
Figure 6 shows an infrared spectrum of the amine compound, as described in Example 3.
Figure 7 shows an SEM image of ivory cream marble coated with epoxy resin, as described in Example 3.
Figure 8 shows an infrared spectrum of bisphenol A diglycil ether epoxy resin, as described in Example 4.
Figure 9 shows an SEM image of ivory cream marble coated with epoxy resin, as described in Example 4.

### Detailed Explanation of Embodiments

The examples below are described in support of particular aspects of the invention and by no means to limit the scope thereof.

### A. Unsaturated polyester resin in emulsion formulations

The unsaturated polyester resin emulsions can be prepared in a stirring tank in which the components of the emulsion are deposited: the unsaturated polyester resin, the corresponding emulsifying agents, the reaction initiating compound, the reaction catalyzing compound, the necessary additives to obtain the desired dispersion, and the necessary amount of water to adjust it to the desired viscosity. The dispersion is finally stirred for a determined time, applying the corresponding shear force.

The curing process of the polyester resin can be done by means of radical polymerization initiated with red-ox system using a reaction catalyst, which is usually a peroxide and a suitable polymerization initiator that can be a cobalt compound, the function of which is to initiate the polymerization reaction by means of breaking down the peroxide into free radicals.

The resin can be emulsified by adding different amounts of water, depending on the features of the desired final product. High viscosity polyester resins in emulsion can be obtained to prepare putty, or very low viscosity products for preparing primers.

Two examples of unsaturated polyester water-based resin formulations are described below:

### Example 1

### Formulation components:

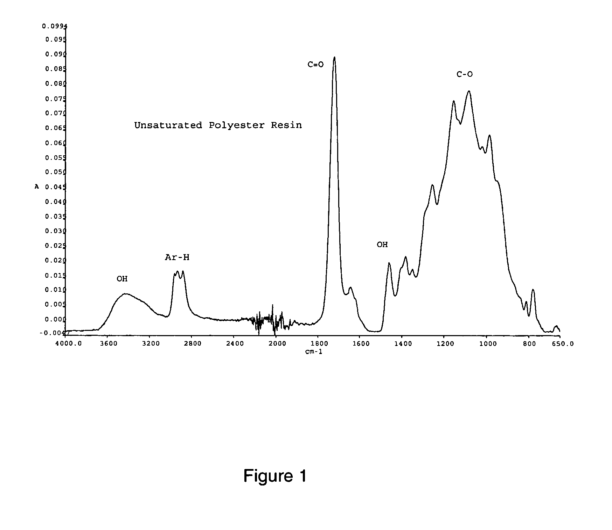

- Unsaturated polyester resin emulsifiable in water (Bayer AG) with the following technical data: viscosity at 20°C, 5.2 rps, 12000-13000 mPa.s, and acidity index of 17 mg KOH. The infrared spectrum of the polymer shows the typical bands of unsaturated polyester (Figure 1)
- Initiator: cobalt acetate tetrahydrate (MERCK)
- Catalyst: hydrogen peroxide (MERCK)
- Water

### Dosing:

■ Unsaturated polyester resin: 70 g
■ Water: 30 g
■ Cobalt acetate tetrahydrate 0.056 g
■ Hydrogen peroxide: 1.4 g

### Properties of the obtained adhesive:

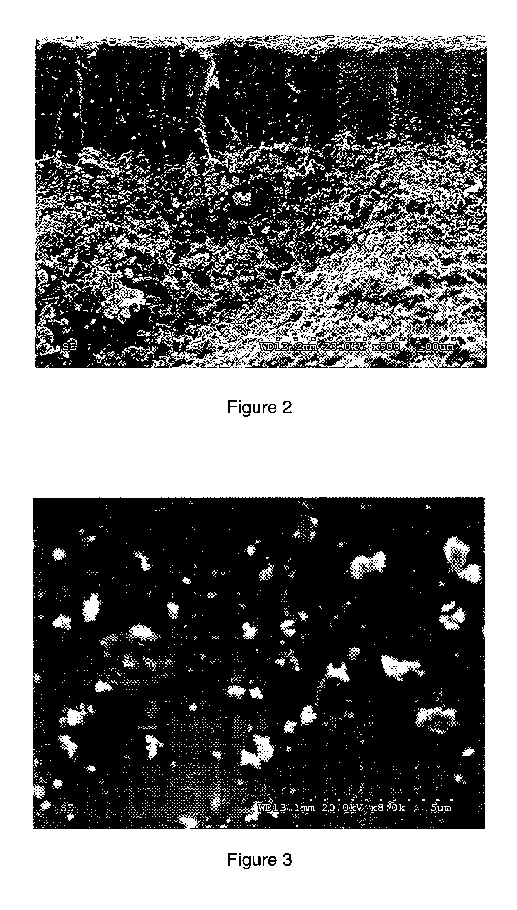

■ Brookfield viscosity (at 20°C and 20 rpm) = 1000-800 mPa.s
■ Surface tension = 28 mJ/m²
■ Vitreous transition temperature of the cured polyester (T_{g∞})= 65°C obtained by means of DSC
■ Adhesion to the marble: Figure 2 includes an SEM image of ivory cream marble coated with this formulation. It can be seen that the coating-marble adhesion is very good.

### Example 2

### Formulation components:

- Unsaturated polyester resin emulsifiable in water (Bayer AG) with the following technical data: viscosity at 20°C, 5.2 rps, 12000-13000 mPa.s, and acidity index of 17 mg KOH
- Initiator, cobalt octoate. (Ashland Chemical)
- Catalyst, methylethylketone peroxide (MEKP) (Ashland Chemical)
- Fillers: pyrogenic silica (Aerosil 200, Degussa)
- Water

### Dosing:

■ Polyester resin 80 g
■ Fillers, pyrogenic silica 5g
■ Water 20g
■ Methylethylketone peroxide: 1.2 g
■ Cobalt octoate: 0.003 g

### Properties of the obtained adhesive:

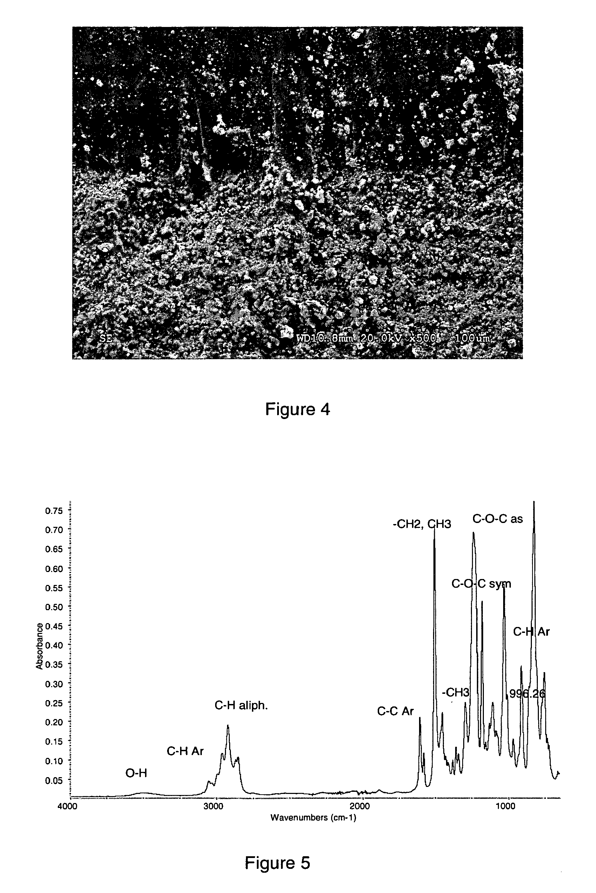

■ Brookfield viscosity (at 20°C and 20 rpm) = 16.500-14.500 mPa.s
■ Surface tension = 31 mJ/m²
■ Vitreous transition temperature of the cured polyester (T_{g∞})= 65°C obtained by means of DSC
■ Dispersion of the silica in the resin in emulsion: The dispersion of the filler in the polymer is very uniform, and the compatibility between the two materials is excellent, as can be seen in the SEM image corresponding to Figure 3.
■ Adhesion to the marble: Figure 4 includes an SEM image of ivory cream marble coated with this formulation. It can be seen that the coating-marble adhesion is very good.

### B. Epoxy resin in emulsion formulations.

The epoxy resin formulations can be different taking into account the different groups of epoxy polymers (obtained from bisphenol A or bisphenol F, or mixtures of both, among others), and the different existing hardeners (amines, polyamides, polyaminoamides, phenol and amino-formaldehyde resins, functional polyesters with carboxylic acids, organic anhydrides, polysulfides and mercaptans, among others). Standard epoxy resins, the product of the reaction between epichlorhydrine and bisphenol-A (bisphenol-F, or mixtures of both), and amine hardeners are most frequently used.

The emulsion can be prepared in a stirring tank in which the components, the epoxy resin, the corresponding emulsifying agents, the hardener, the necessary additives and the necessary amount of water to adjust it to the desired viscosity are deposited. The dispersion is finally stirred while applying a shear force, the standard emulsion being obtained.

Two examples of epoxy water-based resin formulations are described below:

### Example 3

### Formulation components:

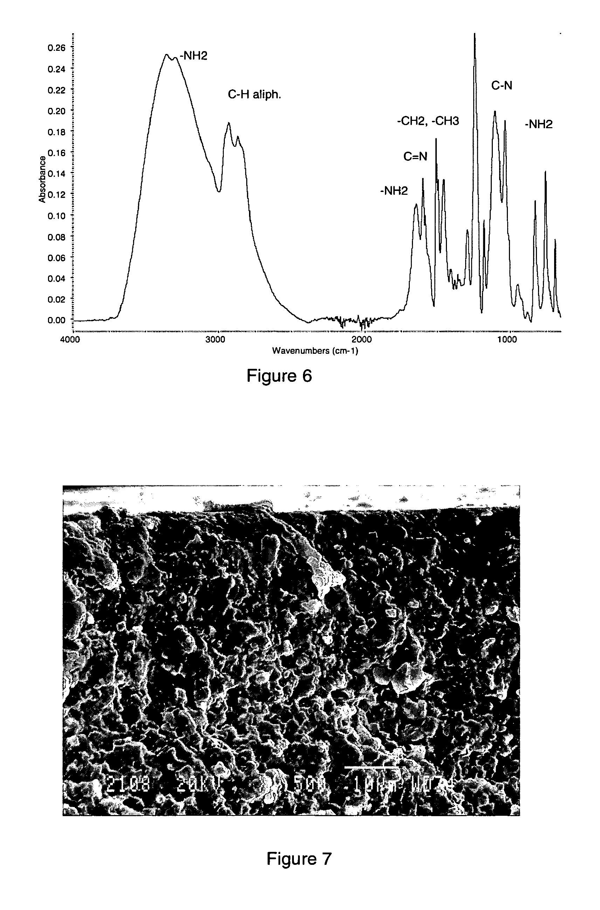

- Liquid epoxy resin having a C₁₂ -C₁₄ bisphenol A/F glycidyl ether chain with the presence of monoglycidylether type reactive diluents. The technical data of the resin is: viscosity 800-100 mPa.s and equivalent epoxy weight (EEW) 190-200. (DOW CHEMICAL). The infrared spectrum is included in Figure 5.
- Coupling agent (DEGUSSA).
- Hardener, aliphatic amine emulsifiable in water, active equivalent hydrogen weight (AEHW) 166, with a 70% solid content. (DOW CHEMICAL). The IR spectrum is included in Figure 6.
- Water.

The phr (parts of hardener per 100 parts of resin) of the recommended mixture ranges between 60-90.

### Dosing:

■ Epoxy resin : 17 g
■ Wetting agent: 0.02 g
■ Coupling agent, silane: 0.02 g
■ Hardener: 10 g
■ Water: 13.5 g

### Properties of the obtained adhesive:

■ Brookfield viscosity (at 20°C and 20 rpm) = 310-260 mPa.s
■ Surface tension = 38 mJ/m²
■ Vitreous transition temperature of the cured polyester (T_{g∞})= 58°C obtained by means of DSC.
■ Adhesion to the marble: Adhesion of the epoxy resin-water to the marble is very good, but the impregnation of the stone system is furthermore very high, as can be seen in Figure 7.

### Example 4

### Components:

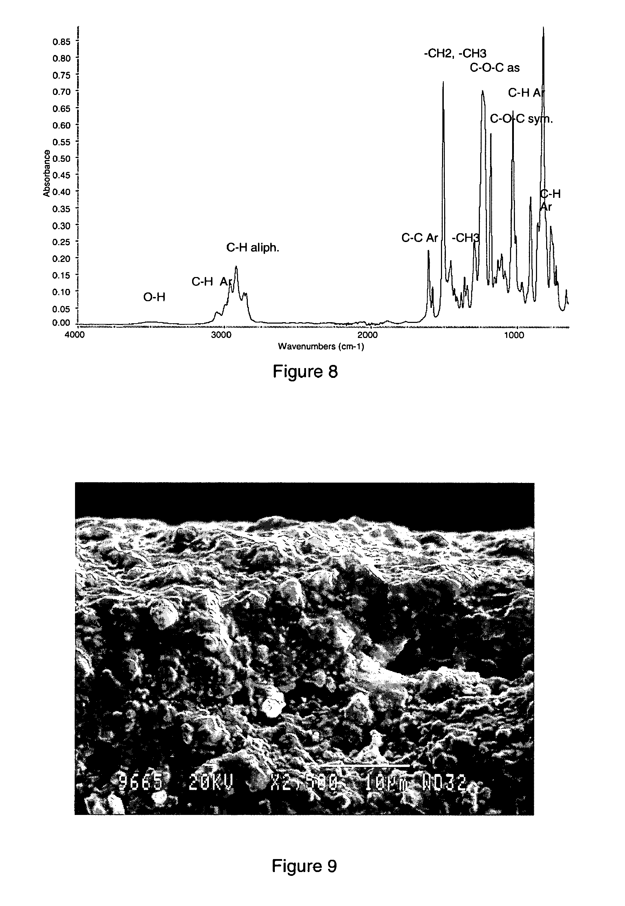

- Liquid epoxy resin having a C₁₂ -C₁₄ bisphenol A glycidyl ether chain. Viscosity 600-800 mPa.s, and equivalent epoxy weight (EEW) 195-204 (DOW **CHEMICAL). The IR spectrum is included in Figure 8.**
- **Hardener, aliphatic amine adduct (DOW CHEMICAL)**
- **Water**

### Dosing:

■ Epoxy resin 14 g
■ Hardener 10g
■ Water 14.4 g

### Properties of the obtained adhesive:

■ Brookfield viscosity (at 20°C and 20 rpm) = 150-100 mPa.s
■ Surface tension = 35 mJ/m²
■ Vitreous transition temperature of the cured polyester (T_{9∞})= 55°C obtained by means of DSC
■ Adhesion to the marble: The adhesion and impregnation of the marble with this formulation is very high, as can be seen in Figure 9.

## Claims

1. Structural adhesives in aqueous emulsion as a consolidating agent of natural stones, **characterized in that** they comprise:
a) heat-setting resins containing emulsifying agents,
b) initiators, between 0 and 20%,
c) catalysts, between 0 and 10%,
d) amine curing agents, between 0 and 100%,
f) water, between 0.1 and 100%,
g) additives, between 0 and 95%.

2. Structural adhesives in aqueous emulsion according to claim 1, **characterized in that** the heat-setting resins are of the unsaturated polyester type.

3. Structural adhesives in aqueous emulsion according to claim 1, **characterized in that** the heat-setting resins are of the epoxy type.

4. Structural adhesives in aqueous emulsion according to claim 1, **characterized in that** the initiator is cobalt acetate.

5. Structural adhesives in aqueous emulsion according to claim 1, **characterized in that** the initiator is cobalt octoate.

6. Structural adhesives in aqueous emulsion according to claim 1, **characterized in that** the catalysts are of the peroxide type or azo or azine compounds.

7. Structural adhesives in aqueous emulsion according to claim 1, **characterized in that** the additives are selected form the group formed by surfactants, mineral fillers, wetting agents, antioxidants, bactericides, pigments, dyes, curing accelerants and retardants.

8. The consolidation process of natural stones, using the structural adhesives in aqueous emulsion according to the previous claims, comprising the following steps:
a) modifying the heat-setting resins to be emulsified in water,
b) mixing under stirring the components of the aqueous consolidating agent: heat-setting resin, curing agent, emulsifying agents, water and corresponding additives, until obtaining a homogenous emulsion,
c) applying the emulsion on the marble, allowing the consolidating agent to cure at a temperature between 5°C and 100°C.

9. The consolidation process of natural stones according to claim 8, **characterized in that** prior dehydration is not required in step c).
